# EUROPEAN PATENT SPECIFICATION

(11) **EP 3 179 323 B1**
(45) Date of publication and mention of the grant of the patent: **06.03.2019**
(21) Application number: 16203129.8
(22) Date of filing: 09.12.2016
(51) Int. Cl.: G05B 19/05, H04L 29/06, G06F 21/55

(54) **METHOD AND SYSTEM FOR DETECTING A PLC IN A SCADA SYSTEM THAT IS SENDING FALSE TELEMETRY DATA**
VERFAHREN UND SYSTEM ZUR ERKENNUNG EINER PLC IN EINEM SCADA-SYSTEM MIT SENDUNG FALSCHER TELEMETRIEDATEN
PROCÉDÉ ET SYSTÈME POUR DÉTECTER UN PLC DANS UN SYSTÈME SCADA QUI ENVOIE DE FAUSSES DONNÉES TÉLÉMÉTRIQUES

(30) Priority: 10.12.2015 IL 24302415
(43) Date of publication of application: 14.06.2017
(73) Proprietor: Deutsche Telekom AG, 53113 Bonn (DE)
(72) Inventor: Shabtai, Asaf, 7684200 Hulda (IL); Puzis, Rami, 7748707 Ashdod (IL); Silberschlag, Shimon, 7175995 Modiin (IL); Roshandel, Mehran, 13591 Berlin (DE)
(74) Representative: Hoeger, Stellrecht & Partner Patentanwälte mbB

(56) References cited:
- EP-A1- 1 921 525
- EP-A1- 2 790 078
- EP-A2- 2 660 668
- DE-A1-102005 063 052
- US-B1- 8 667 589

## Description

### Field of the Invention

The invention is from the field of Supervisory Control And Data Acquisition (SCADA) systems. Specifically the invention relates to a method and system for detecting a Programmable Logic Controller (PLC) in a SCADA system that is sending false telemetry data.

### Background of the Invention

Supervisory Control and Data Acquisition (SCADA) systems are responsible for monitoring, managing and controlling the safe and efficient operation of systems responsible for basic infrastructure and industrial enterprises such as electricity, oil, and gas production and distribution, water distribution, water and a sewage treatment, chemical processes, traffic control, railroad signal light control, airport operations, food production, and controlling and monitoring systems such as lighting,, heating, air conditioning, and elevators in buildings.

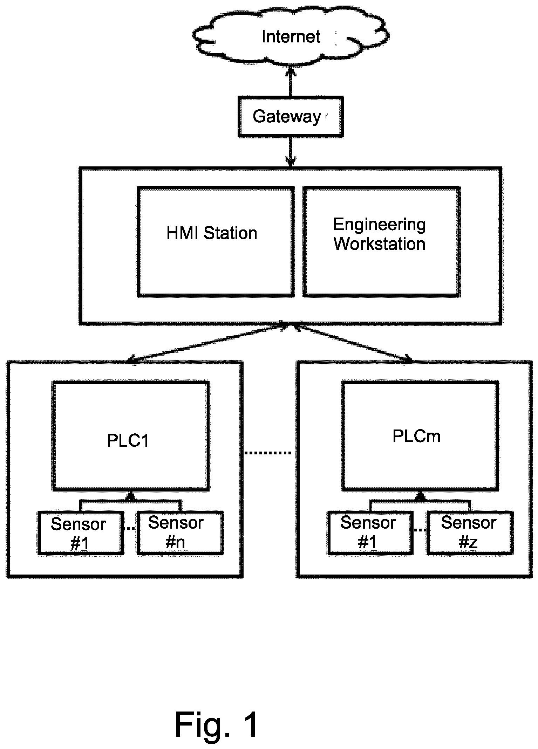

The basic architecture of SCADA systems is shown in Fig. 1. A SCDA system comprises the following main components:
- Human Machine Interface (HMI) -- A HMI is a workstation used by SCADA operators for the day to day operation and monitoring of the system. This workstation can be used to change setpoints (controlled values), stop or shutdown operation of one or more physical devices or the entire system, etc.
- Programmable Logic Controller (PLC) - A PLC is a small embedded microcomputer that can be programmed to control one or more physical devices.
- Remote Terminal Unit (RTU) - A RTU is a simpler, older form of PLC, used mainly for telemetry where no physical actuation of devices is needed.
- Engineering workstation - This is a workstation dedicated to programming the PLC devices used in the system. Re-programming the PLC can completely alter the behavior of the system. Doing so without the operators knowledge may put in jeopardy the system and the machines it controls.
- Historian - This is a dedicated server used to record all the timestamped activity in the system.

There are many differences between modern information technology (IT) systems and SCADA systems. The most relevant ones within the context of security are:
- Modern vs. Old - Most modern IT systems have a life cycle of several years, after which they undergo upgrades and improvements. By contrast, most SCADA systems have lifecycles of 20-30 years, because of costs and reliability considerations. This means that current production systems might have been planned and manufactured when the Internet was at infancy.
- Concentrated vs. Distributed - Most modern IT systems are located in special areas called Data Centers or Server Farms. SCADA systems on the other hand can be located almost anywhere, from deserts to the middle of the ocean, with various wire and wireless means of communication. This fact alone makes changing these systems prohibitively expensive.
- Patches - Most IT enterprises have learned to incorporate patch cycles, where they upgrade their systems for handling security vulnerabilities that have been found. By contrast, many SCADA operators don't upgrade their setups at all, because they either can't afford the downtime, or simply don't want to mess with a reliable system they currently use.
- Modern approach to security - Many IT systems have incorporated security measures, especially traffic control, encryption and authentication. Most SCADA systems do not use any such measures, usually because they are not supported or for reliability concerns. "Reliability first" means that the operators are anxious about any components that are not directly related to the smooth operation of the network and/or the systems, especially those that have pure security value and might prevent proper and immediate control of the system in an emergency.

Most security breaches we read about daily are focused around stealing information of various kinds - credit card numbers, personally identifiable information (PII), trade secrets, engineering plans, national security info etc. Those attacks are known in military parlance as CNE - Computer Network Exploitation. This means that in many IT networks, confidentiality of the information on the network is paramount, and the operators top security priority is to support it. On the other hand, SCADA networks usually don't contain any secrets, and the main concern for the operators is the reliability of the system - its integrity and availability. Attacks against such systems will try to hurt the capability of the operators to monitor and control it, and may even try to physically hurt the actual machines controlled by the system. These attacks are known as CNA - Computer Network Attack.

The following are the main security issues with current SCADA systems:
- Internet connectivity - As shown in Fig. 1, many SCADA operators have connected their networks to the Internet or to Internet connected networks for efficiency's sake or maintenance consideration. But the security model for these SCADA networks was that of a standalone, unconnected network, and they are not prepared for the kind of threats that the modern Internet brings with it.
- Flat network design - The networks used are usually "flat", which means no segmentation or traffic control is used, for simplicity and reliability. The result is systems that the attacker has only to gain access to; when he is inside the network, the game is over for the defender.
- No/limited implementation of security measures - As mentioned earlier, operators shun any equipment not directly responsible for operation of the systems, mainly because of reliability and economic considerations.

The main targets of attack in SCADA systems are the Programmable Logic Controllers (PLCs), which are embedded microcomputers that can be programmed to control physical devices in SCADA systems. They receive information (e.g., status) from physical devices and forward the information to the operator, forward commands, sent by the operator via the Human-Machine Interface (HMI), to the physical devices, and can be reprogrammed through the Engineering Workstation (EWS).

Existing threats to the PLC's are:
- maliciously re-programing a PLC in order to gain full control on the PLC;
- manipulating information provided by the PLC;
- sending false/malicious commands to the physical devices (e.g., stopping a turbine).

Many attacks against SCADA systems have been made public in the past. Unfortunately, in most cases the description of the attack is vague, with little or no technical details to help the security community understand the attacker's approach and devise specific countermeasures. One distinct exception to this rule is the attack known as STUXNET.

This attack was conducted against Iran's nuclear program, specifically against the Uranium enrichment facilities in Natanz. This attack was meticulously documented by experts, including the Langner Group from Germany and Symantec.

In many ways, this attack was the first of its kind - it tried to destroy the actual centrifuges connected to the control systems. It also used the very first known rootkit on the control system PLC. The attack vector was the engineering workstation. The attackers gained access to the engineering workstation and used it to change the programming of the PLC controlling the centrifuges. The rootkit functionality of the attack was used to hide these changes from the operators using the HMI or engineering workstation.

As this is a very powerful attack vector, which upon successful reprogramming of the PLC allows the attacker full control over the system and also can dictate the level of visibility for the SCADA system operators (via the HMI), a proper security solution is necessary.

US 8,667,589 discloses a protection system for an automatic process control system (APCS). The system comprises programmable anti-intrusion (PAI) modules that are inserted at various locations in the APCS. The PAI modules are programmed to detect and alert the APCS manager of unauthorized physical components or unauthorized or faulty data being transferred between components of the APCS.

EP 2 660 668 A2 discloses protection systems and methods for verifying the authenticity of executable files containing instructions to control the operation of an industrial control system that have been stored in an industrial controller. To accomplish this, the disclosed systems and methods enable the verification of both the identity and the contents of each of the executable files before they are executed by the industrial controller by using a whitelisting system. The disclosed embodiments utilize a secure whitelist file, which comprises a collection of hash key values for the authorized executable files in a particular software release, that are provided by the software developer along with each release of the executable files.

It is a purpose of the present invention to provide a system that allows operators to detect false information from PLCs that have been malicious re-programmed in SCADA systems.

Further purposes and advantages of this invention will appear as the description proceeds.

### Summary of the Invention

In a first aspect the invention is a method of detecting whether an attacker has re-programmed a Programmable Logic Controller (PLC) in a Supervisory Control And Data Acquisition (SCADA) system in order to send false information back to the Human Machine Interface (HMI). The method comprises comparing the values of data signals sent from at least one sensor to a PLC to the values of the data signals that the PLC sends to the HMI and issuing an alert if the values of the data signals sent from the at least one sensor have been altered.

The method of the invention comprises:
a. sending the values of data signals sent from at least one sensor to the PLC;
b. adding a passive tap in the communication channel between the at least one sensor and the PLC to monitor the sensor data that is received by the PLC;
c. sending the monitored data to a monitoring Hash Sensor that is connected via a one way link to the PLC;
d. using software on the Hash Sensor to determine cryptographic values of the sensor data by computing a cryptographic message authentication code (MAC) function on the monitored data;
e. sending the cryptographic values to the PLC;
f. sending the cryptographic values and the values of the data signals sent from the at least one sensor via the PLC to the HMI; and
g. using software in the HMI to encrypt the data signals sent from the at least one sensor via the PLC to the HMI and comparing them against the cryptographic values sent from the Hash Sensor via the PLC to the HMI.

The HMI issues an alert if the encrypted data signals sent from the at least one sensor via the PLC to the HMI are different than the cryptographic values sent from the Hash Sensor via the PLC to the HMI.

Another method of detecting whether an attacker has re-programmed a PLC in a SCADA system in order to send false information back to the HMI comprises:
a. sending the values of data signals sent from at least one sensor to the PLC;
b. adding a passive tap in the communication channel between the at least one sensor and the PLC to monitor the sensor data that is received by the PLC;
c. sending the monitored data received by the PLC to an integrity checker module;
d. adding a passive tap in the communication channel between the PLC and the HMI to monitor the sensor data that is sent by the PLC;
e. sending the monitored data sent by the PLC to the integrity checker module; and
f. using software on the integrity checker module to compare the monitored data sent by the PLC to the monitored data received by the PLC.

In this method, if the monitored data sent by the PLC is not the same as the monitored data received by the PLC, the integrity checker module issues an alert.

In a second aspect the invention is a system for detecting whether an attacker has re-programmed a Programmable Logic Controller (PLC) in a Supervisory Control And Data Acquisition (SCADA) system in order to send false information back to the Human Machine Interface (HMI). The system comprises:
a. at least one sensor;
b. a PLC;
c. a communication channel between the at least one sensor and the PLC;
d. an HMI;
e. a communication channel between the PLC and the HMI;
f. a monitoring Hash Sensor that is connected via a one way link to the PLC;
g. a passive tap in the communication channel between the at least one sensor and the PLC, the passive tap operative to monitor the sensor data that is sent by the at least one sensor and received by the PLC and to send the monitored data to the Hash Sensor;
h. software in the Hash Sensor that is operative to determine cryptographic values of the sensor data by computing a cryptographic message authentication code (MAC) function on the monitored data and to send the cryptographic values to the PLC; and
i. encrypt the data signals sent from the at least one sensor via the PLC to the HMI and to compare them against the cryptographic values sent from the Hash Sensor via the PLC to the HMI and to issue an alert if the encrypted data signals sent from the at least one sensor via the PLC to the HMI are different from the cryptographic values sent from the Hash Sensor via the PLC to the HMI.

Also described is another system for detecting whether an attacker has re-programmed a Programmable Logic Controller (PLC) in a Supervisory Control And Data Acquisition (SCADA) system in order to send false information back to the Human Machine Interface (HMI). The system comprises:
a. at least one sensor;
b. a PLC;
c. a communication channel between the at least one sensor and the PLC;
d. an HMI;
e. a communication channel between the PLC and the HMI;
f. a first passive tap in the communication channel between the at least one sensor and the PLC, the passive tap operative to monitor the sensor data that is sent by the at least one sensor and received by the PLC;
g. a second passive tap in the communication channel between the PLC and the HMI, the passive tap operative to monitor the sensor data that is sent by the PLC and received by the HMI;
h. an integrity checker module operative to receive from the first passive tap the monitored sensor data received by the PLC and from the second passive tap the monitored sensor data sent by the PLC.

In this system the integrity checker module comprises software operative to compare the monitored data sent by the PLC to the monitored data received by the PLC and, if they are not the same, the integrity checker module issues an alert.

All the above and other characteristics and advantages of the invention will be further understood through the following illustrative and non-limitative description of embodiments thereof, with reference to the appended drawings.

### Brief Description of the Drawings

- Fig. 1 schematically shows the basic architecture of a SCADA system;
- Fig. 2 schematically shows the basic architecture of the detection system of the invention; and
- Fig. 3 schematically shows the basic architecture of a second detection system.

### Detailed Description of Embodiments of the Invention

The goal of the present invention is to detect whether an attacker has re-programmed a Programmable Logic Controller (PLC) in order to send false information back to the Human Machine Interface (HMI) (e.g., Stuxnet). The assumption is that the attacker already has accessed the PLC and can control and manipulate the data that is received from the sensors and field actuators that monitor and activate the devices and processes controlled by the PLC and then are sent to the HMI.

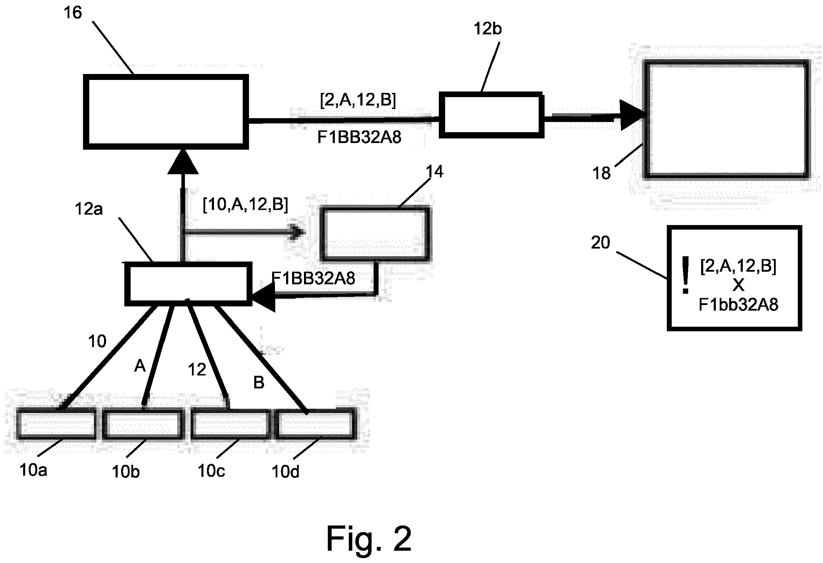

Fig. 2 schematically shows the architecture of the detection system of the invention. In this system, the sensors 10a, 10b, 10c, and 10d send data having values 10, A, 12, and B respectively to HMI 18 via switch 12a, PLC 16, and switch 12b. A passive tap is added in the communication channel between switch 12a and PLC 16 to monitor the sensor data that is received by the PLC. A cryptographic message authentication code (MAC) function is computed on this data by software on a monitoring Hash Sensor 14 that is connected via a one way link to the PLC 16. Hash Sensor 14 acts as a simulated sensor and sends the cryptographic values to the PLC 16, which sends the values received from the sensors and the cryptographic values to the HMI 18 where the software in the HMI encrypts the sensor values received from the PLC using the same MAC function and keys that is used by the Hash Sensor 14 and then compares the two sets of encrypted values. If the PLC 16 has been attacked and the attacker succeeds in modifying either the data values the PLC received from sensors 10a to 10d and/or the cryptographic values it received from Hash Sensor 14, then the two sets of encrypted values will be different and this will be detected by software in the HMI, which will issue a report 20 warning that the PLC has been attacked.

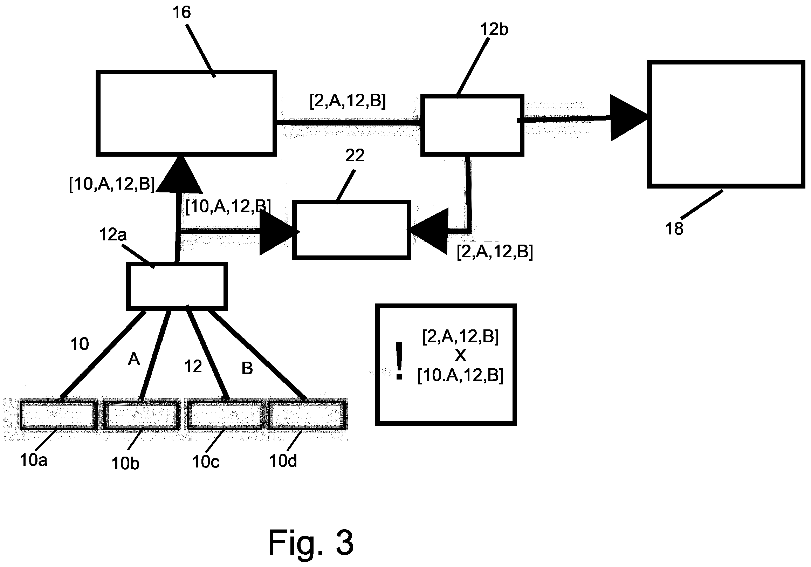

Fig. 3 schematically shows the architecture of another system for detecting whether an attacker has re-programmed a PLC in a SCADA system . This system is very similar to the system of the invention with the exception that the hash sensor 14 is replaced with an integrity checker module 22 that receives as input the sensor data signals that enter PLC 16 via a tap on the communication channel between switch 12a and the PLC 16 and the sensor data signals that exit PLC 16 via a tap on the communication channel between the PLC 16 and the HMI 18. The integrity checker module 22 comprises software adapted to compare the values of the data input to the PLC to those of the data output from the PLC and, if as in the case shown, they are not the same, to issue a warning report 20.

Although the invention has been described by way of illustration, it will be understood that the invention may be carried out with many variations, modifications, and adaptations, without exceeding the scope of the claims.

## Claims

1. A method of detecting whether an attacker has re-programmed a Programmable Logic Controller (PLC) (16) in a Supervisory Control And Data Acquisition (SCADA) system in order to send false information back to a Human Machine Interface (HMI) (18), the method comprising comparing values of data signals (10, A, 12, B) sent from at least one sensor (10a, 10b, 10c, 10d) to the PLC (16) to values of data signals (2, A, 12, B) that the PLC (16) sends to the HMI (18) and issuing an alert if the values of the data signals (10, A, 12, B) sent from the at least one sensor (10a, 10b, 10c, 10d) have been altered,
the method being **characterized in that** it comprises the steps of:
a. sending the values of the data signals (10, A, 12, B) sent from the at least one sensor (10a, 10b, 10c, 10d) to the PLC (16);
b. adding a passive tap in the communication channel between the at least one sensor (10a, 10b, 10c, 10d) and the PLC (16) to monitor the sensor data (10, A, 12, B) that is received by the PLC (16);
c. sending the monitored data (10, A, 12, B) to a monitoring Hash Sensor (14) that is connected via a one way link to the PLC (16);
d. using software on the Hash Sensor (14) to determine cryptographic values (F1BB32A8) of the sensor data (10, A, 12, B) by computing a cryptographic message authentication code (MAC) function on the monitored data (10, A, 12, B);
e. sending the cryptographic values (F1BB32A8) to the PLC (16);
f. sending the cryptographic values (F1BB32A8) and the values of the data signals (2, A, 12, B) sent from the at least one sensor (10a, 10b, 10c, 10d) via the PLC (16) to the HMI (18); and
g. using software in the HMI (18) to encrypt the data signals (2, A, 12, B) sent from the at least one sensor (10a, 10b, 10c, 10d) via the PLC (16) to the HMI (18) and comparing them against the cryptographic values (F1BB32A8) sent from the Hash Sensor (14) via the PLC (16) to the HMI (18);
wherein the HMI (18) issues an alert if the encrypted data signals (2, A, 12, B) sent from the at least one sensor (10a, 10b, 10c, 10d) via the PLC (16) to the HMI (18) are different than the cryptographic values (F1BB32A8) sent from the Hash Sensor (14) via the PLC (16) to the HMI (18).

2. A system for detecting whether an attacker has re-programmed a Programmable Logic Controller (PLC) (16) in a Supervisory Control And Data Acquisition (SCADA) system in order to send false information back to a Human Machine Interface (HMI) (18), the system comprising:
a. at least one sensor (10a, 10b, 10c, 10d);
b. a PLC (16);
c. a communication channel between the at least one sensor (10a, 10b, 10c, 10d) and the PLC (16);
d. an HMI (18); and
e. a communication channel between the PLC (16) and the HMI (18), the system being **characterized in that** it additionally comprises:
f. a monitoring Hash Sensor (14) that is connected via a one way link to the PLC (16);
g. a passive tap in the communication channel between the at least one sensor (10a, 10b, 10c, 10d) and the PLC (16), the passive tap operative to monitor the sensor data (10, A, 12, B) that is sent by the at least one sensor (10a, 10b, 10c, 10d) and received by the PLC (16) and to send the monitored data (10, A, 12, B) to the Hash Sensor (14); and
h. software in the Hash Sensor (14) that is operative to determine cryptographic values (F1BB32A8) of the sensor data (10, A, 12, B) by computing a cryptographic message authentication code (MAC) function on the monitored data (10, A, 12, B) and to send the cryptographic values (F1BB32A8) to the PLC (16),
wherein software in the HMI (18) is operative to encrypt the data signals (2, A, 12, B) sent from the at least one sensor (10a, 10b, 10c, 10d) via the PLC (16) to the HMI (14) and to compare them against the cryptographic values (F1BB32A8) sent from the Hash Sensor (14) via the PLC (16) to the HMI (18) and to issue an alert if the encrypted data signals (2, A, 12, B) sent from the at least one sensor (10a, 10b, 10c, 10d) via the PLC (16) to the HMI (18) are different from the cryptographic values (F1BB32A8) sent from the Hash Sensor (14) via the PLC (16) to the HMI (18).

## Patentansprüche

1. Verfahren zum Detektieren, ob ein Angreifer einen Programmierbaren Logik-Controller (PLC) (16) in einem Supervisory Control And Data Acquisition (SCADA)-System umprogrammiert hat, um falsche Informationen an eine Mensch-Maschine-Schnittstelle (HMI) (18) zurückzusenden, wobei das Verfahren umfasst, Werte von Datensignalen (10, A, 12, B), die von mindestens einem Sensor (10a, 10b, 10c, 10d) an den PLC (16) gesendet wurden, mit Werte von Datensignalen (2, A, 12, B), die die PLC (16) an die HMI (18) sendet, zu vergleichen und einen Alarm auszugeben, wenn die Werte der von dem mindestens einen Sensor (10a, 10b, 10c, 10d) gesendeten Datensignale (10, A, 12, B) verändert wurden,
wobei das Verfahren **dadurch gekennzeichnet ist, dass** es folgende Schritte umfasst:
a. Senden der Werte der von dem mindestens einen Sensor (10a, 10b, 10c, 10d) gesendeten Datensignale (10, A, 12, B) zu dem PLC (16);
b. Hinzufügen eines passiven Abgriffs in dem Kommunikationskanal zwischen dem mindestens einen Sensor (10a, 10b, 10c, 10d) und dem PLC (16) zum Überwachen der Sensordaten (10, A, 12, B), die durch den PLC (16) empfangen werden;
c. Senden der überwachten Daten (10, A, 12, B) an einen überwachenden Hash-Sensor (14), der über einen Einweg-Link mit dem PLC (16) verbunden ist;
d. Verwenden von Software auf dem Hash-Sensor (14) zum Bestimmen kryptografischer Werte (F1BB32A8) der Sensordaten (10, A, 12, B) durch Berechnen einer kryptografischen Message Authentication Code (MAC)-Funktion an den überwachten Daten (10, A, 12, B);
e. Senden der kryptografischen Werte (F1BB32A8) zu dem PLC (16);
f. Senden der kryptografischen Werte (F1BB32A8) und der Werte der von dem mindestens einen Sensor (10a, 10b, 10c, 10d) gesendeten Datensignale (2, A, 12, B) über den PLC (16) zu der HMI (18); und
g. Verwenden der Software in der HMI (18) zum Verschlüsseln der Datensignale (2, A, 12, B), die von dem mindestens einen Sensor (10a, 10b, 10c, 10d) über den PLC (16) zu der HMI (18) gesendet wurden, und Vergleichen dieser Datensignale mit den kryptografischen Werten (F1BB32A8), die von dem Hash-Sensor (14) über den PLC (16) zu der HMI (18) gesendet wurden;
wobei die HMI (18) einen Alarm ausgibt, wenn die verschlüsselten Datensignale (2, A, 12, B), die von dem mindestens einen Sensor (10a, 10b, 10c, 10d) über den PLC (16) zu der HMI (18) gesendet wurden, andere sind als die kryptografischen Werte (F1BB32A8), die von dem Hash-Sensor (14) über den PLC (16) zu der HMI (18) gesendet wurden.

2. System zum Detektieren, ob ein Angreifer einen Programmierbaren Logik-Controller (PLC) (16) in einem Supervisory Control And Data Acquisition (SCADA)-System umprogrammiert hat, um falsche Informationen an eine Mensch-Maschine-Schnittstelle (HMI) (18) zurückzusenden, wobei das System Folgendes umfasst:
a. mindestens einen Sensor (10a, 10b, 10c, 10d);
b. einen PLC (16);
c. einen Kommunikationskanal zwischen dem mindestens einen Sensor (10a, 10b, 10c, 10d) und dem PLC (16);
d. eine HMI (18); und
e. einen Kommunikationskanal zwischen dem PLC (16) und der HMI (18), wobei das System **dadurch gekennzeichnet ist, dass** es zusätzlich Folgendes umfasst:
f. einen überwachenden Hash-Sensor (14), der über einen Einweg-Link mit dem PLC (16) verbunden ist;
g. einen passiven Abgriff in dem Kommunikationskanal zwischen dem mindestens einen Sensor (10a, 10b, 10c, 10d) und dem PLC (16), wobei der passive Abgriff dazu dient, die Sensordaten (10, A, 12, B), die durch den mindestens einen Sensor (10a, 10b, 10c, 10d) gesendet und durch den PLC (16) empfangen wurden, zu überwachen und die überwachten Daten (10, A, 12, B) zu dem Hash-Sensor (14) zu senden; und
h. Software in dem Hash-Sensor (14), die dafür geeignet ist, kryptografische Werte (F1BB32A8) der Sensordaten (10, A, 12, B) durch Berechnen einer kryptografischen Message Authentication Code (MAC)-Funktion an den überwachten Daten (10, A, 12, B) zu bestimmen und die kryptografischen Werte (F1BB32A8) zu dem PLC (16) zu senden,
wobei Software in der HMI (18) dazu dient, die Datensignale (2, A, 12, B), die von dem mindestens einen Sensor (10a, 10b, 10c, 10d) über den PLC (16) zu der HMI (14) gesendet wurden, zu verschlüsseln und sie mit den kryptografischen Werten (F1BB32A8) zu vergleichen, die von dem Hash-Sensor (14) über den PLC (16) zu der HMI (18) gesendet wurden, und einen Alarm auszugeben, wenn die verschlüsselten Datensignale (2, A, 12, B), die von dem mindestens einen Sensor (10a, 10b, 10c, 10d) über den PLC (16) zu der HMI (18) gesendet wurden, andere sind als die kryptografische Werte (F1BB32A8), die von dem Hash-Sensor (14) über den PLC (16) zu der HMI (18) gesendet wurden.

## Revendications

1. Méthode pour détecter si un agresseur a reprogrammé un dispositif de commande à logique programmable (PLC) (16) dans un système d'acquisition de données et de contrôle de surveillance (SCADA) de manière à renvoyer de fausses informations à une interface homme-machine (HMI) (18), le procédé comprenant la comparaison de valeurs de signaux de données (10, A, 12, B) transmis à partir d'au moins un capteur (10a, 10b, 10c, 10d) au PLC (16) à des valeurs de signaux de données (2, A, 12, B) que le PLC (16) transmet à l'HMI (18) et l'émission d'une alerte si les valeurs des signaux de données (10, A, 12, B) transmis à partir de l'au moins un capteur (10a, 10b, 10c, 10d) ont été altérées,
la méthode étant **caractérisée en ce qu'**elle comprend les étapes de :
a. transmission des valeurs des signaux de données (10, A, 12, B) transmis à partir de l'au moins un capteur (10a, 10b, 10c, 10d) au PLC (16) ;
b. ajout d'une dérivation passive dans le canal de communication entre l'au moins un capteur (10a, 10b, 10c, 10d) et le PLC (16) pour surveiller les données de capteur (10, A, 12, B) qui sont reçues par le PLC (16) ;
c. transmission des données surveillées (10, A, 12, B) à un capteur de hachage de surveillance (14) qui est connecté via une liaison unidirectionnelle au PLC (16) ;
d. utilisation d'un logiciel sur le capteur de hachage (14) pour déterminer des valeurs cryptographiques (F1BB32A8) des données de capteur (10, A, 12, B) en calculant une fonction de code d'authentification de message (MAC) cryptographique sur les données surveillées (10, A, 12, B) ;
e. transmission des valeurs cryptographiques (F1BB32A8) au PLC (16) ;
f. transmission des valeurs cryptographiques (F1BB32A8) et des valeurs de signaux de données (2, A, 12, B) transmis à partir de l'au moins un capteur (10a, 10b, 10c, 10d) via le PLC (16) à l'HMI (18) ; et
g. utilisation d'un logiciel dans l'HMI (18) pour crypter les signaux de données (2, A, 12, B) transmis à partir de l'au moins un capteur (10a, 10b, 10c, 10d) via le PLC (16) à l'HMI (18) et leur comparaison avec les valeurs cryptographiques (F1BB32A8) transmises à partir du capteur de hachage (14) via le PLC (16) à l'HMI (18) ;
dans laquelle l'HMI (18) émet une alerte si les signaux de données cryptés (2, A, 12, B) transmis à partir de l'au moins un capteur (10a, 10b, 10c, 10d) via le PLC (16) à l'HMI (18) sont différents des valeurs cryptographiques (F1BB32A8) transmises à partir du capteur de hachage (14) via le PLC (16) à l'HMI (18).

2. Système pour détecter si un agresseur a reprogrammé un dispositif de commande à logique programmable (PLC) (16) dans un système d'acquisition de données et de contrôle de surveillance (SCADA) de manière à renvoyer de fausses informations à une interface homme-machine (HMI) (18), le système comprenant :
a. au moins un capteur (10a, 10b, 10c, 10d) ;
b. un PLC (16) ;
c. un canal de communication entre l'au moins un capteur (10a, 10b, 10c, 10d) et le PLC (16) ;
d. une HMI (18) ; et
e. un canal de communication entre le PLC (16) et l'HMI (18),
le système étant **caractérisé en ce qu'**il comprend de plus :
f. un capteur de hachage de surveillance (14) qui est connecté via une liaison unidirectionnelle au PLC (16) ;
g. une dérivation passive dans le canal de communication entre l'au moins un capteur (10a, 10b, 10c, 10d) et le PLC (16), la dérivation passive fonctionnant pour surveiller les données de capteur (10, A, 12, B) qui sont transmises par l'au moins un capteur (10a, 10b, 10c, 10d) et reçues par le PLC (16) et pour transmettre les données surveillées (10, A, 12, B) au capteur de hachage (14) ; et
h. un logiciel dans le capteur de hachage (14) qui fonctionne pour déterminer des valeurs cryptographiques (F1BB32A8) des données de capteur (10, A, 12, B) en calculant une fonction de code d'authentification de message (MAC) cryptographique sur les données surveillées (10, A, 12, B) et transmettre les valeurs cryptographiques (F1BB32A8) au PLC (16),
dans lequel un logiciel dans l'HMI (18) fonctionne pour crypter les signaux de données (2, A, 12, B) transmis à partir de l'au moins un capteur (10a, 10b, 10c, 10d) via le PLC (16) à l'HMI (14) et les comparer avec les valeurs cryptographiques (F1BB32A8) transmises à partir du capteur de hachage (14) via le PLC (16) à l'HMI (18) et émettre une alerte si les signaux de données cryptés (2, A, 12, B) transmis à partir de l'au moins un capteur (10a, 10b, 10c, 10d) via le PLC (16) à l'HMI (18) sont différents des valeurs cryptographiques (F1BB32A8) transmises par le capteur de hachage (14) via le PLC (16) à l'HMI (18).
